(19) Europäisches Patentamt
European Patent Office
Office européen des brevets

(11) **EP 4 033 694 B1**

(12) **EUROPÄISCHE PATENTSCHRIFT**

(45) Veröffentlichungstag und Bekanntmachung des Hinweises auf die Patenterteilung:
**16.08.2023  Patentblatt 2023/33**

(21) Anmeldenummer: **21153546.3**

(22) Anmeldetag: **26.01.2021**

(51) Internationale Patentklassifikation (IPC):
**H04L 9/00** *(2022.01)*     **H04L 9/32** *(2006.01)*

(52) Gemeinsame Patentklassifikation (CPC):
**H04L 9/3239; H04L 9/3247; H04L 9/50;**
H04L 2209/56

(54) **VERFAHREN UND VORRICHTUNG ZUR VEREINHEITLICHUNG VON BLOCKCHAIN ADRESSEN**

METHOD AND DEVICE FOR STANDARDISING BLOCKCHAIN ADDRESSES

PROCÉDÉ ET DISPOSITIF D'UNIFORMISATION DES ADRESSES DE CHAINE DE BLOCS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.07.2022  Patentblatt 2022/30**

(73) Patentinhaber: **Hochschule Ruhr West 45479 Mülheim an der Ruhr (DE)**

(72) Erfinder: **Jansen, Marc 47441 Moers (DE)**

(74) Vertreter: **Michalski Hüttermann & Partner Patentanwälte mbB Kaistraße 16A 40221 Düsseldorf (DE)**

(56) Entgegenhaltungen:
**US-A1- 2020 092 097    US-A1- 2020 287 715**

- **DYLAN YAGA ET AL: "Blockchain Technology Overview", ARXIV.ORG, CORNELL UNIVERSITY LIBRARY, 201 OLIN LIBRARY CORNELL UNIVERSITY ITHACA, NY 14853, 26. Juni 2019 (2019-06-26), XP081384433, DOI: 10.6028/NIST.IR.8202**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 033 694 B1

**Beschreibung**

Die Erfindung betrifft ein computerimplementiertes Verfahren zur Generierung eines privaten Schlüssels in einem ersten Distributed-Ledger-Technologie (DLT) Systems x zur Verwendung des privaten Schlüssels in zumindest einem zweiten Distributed-Ledger-Technologie (DLT) Systems y. Auch betrifft die Erfindung ein System zur Generierung eines privaten Schlüssels in einem ersten Distributed-Ledger-Technologie (DLT) Systems x zur Verwendung des privaten Schlüssels in zumindest einem zweiten Distributed-Ledger-Technologie (DLT) Systems y sowie ein Computerprogrammprodukt, umfassend Befehle, die bei der Ausführung des Programms durch einen Computer diesen veranlassen, die Schritte des Verfahrens auszuführen.

Seit dem Start der Bitcoin Blockchain, als erste Distributed Ledger Technology (DLT), im Jahre 2009 wurden eine Vielzahl anderer DLT Systeme (Ethereum, IOTA, Waves, EOS, usw.) in Betrieb genommen. So unterschiedlich die jeweiligen Zielsetzungen und Herangehensweisen dieser verschiedenen Systeme ist, haben sie alle einige grundlegende Dinge, wie z.B. Hashing, asymmetrische Kryptographie, P2P basierte Konsensmechanismen und / oder die Verwendung von Adressen, gemeinsam. Aktuell existiert weder ein Standard in Bezug auf die verwendeten Hashingverfahren (SHA256, Keccak, usw.), die Konsensmechanismen (PoW, PoS, PoA, usw.), noch auf die zugrundeliegenden asymmetrischen kryptographischen Verfahren (ECC, Gost, usw.), was wiederrum Auswirkungen auf grundlegende Funktionalitäten, wie z.B. die Generierung von Adressen hat. In der Folge führt dies dazu, dass Adressen, die innerhalb der einen DLT erzeugt wurden, in der Regel nicht in einer anderen DLT verwendet werden können, was wiederrum die Interaktion der einzelnen DLT Systeme erschwert und damit zu einer Isolierung der einzelnen Systeme führt.

Zusätzlich erschwert wird die Problematik noch durch das sogenannte Oracle Problem: automatisierte Mechanismen, die innerhalb einer DLT Technologie ablaufen (Smart Contracts, Chaincode, usw.), können aufgrund der P2P basierten Konsensmechanismen lediglich auf Daten aus der jeweiligen DLT zugreifen.

Während aktuell verschiedene Lösungen für das Oracle Problem untersucht werden (Chainlink, CosmosHub, Polkadot, usw.), gibt es bisher keine Lösung für die Generierung von Adressen, die über die Grenzen einzelner DLT Systeme hinaus verwendet werden können.

Die oben beschriebene Problematik der Isolierung der einzelnen DLT Systeme hat für die Nutzer die Konsequenz, dass sie für jedes verwendete DLT Systeme jeweils eigene Adressen generieren und die hierzu notwendigen Zugangsdaten entsprechend sicher aufbewahren müssen. Dies stellt auf der einen Seite einen erhöhten Verwaltungsaufwand dar, auf der anderen Seite wirkt sich dies aber auch negativ auf die Sicherheit aus, da Nutzer hier oftmals nachlässig werden und nicht ausreichend sorgsam sowohl bei der Auswahl als auch der Aufbewahrung der jeweiligen Zugangsdaten sind. Ferner geht die aktuelle Forschung davon aus, dass eine hohe Zahl an Adressen, z.B. in der Bitcoin Blockchain, aktuell nicht mehr verwendet werden können, da die jeweiligen Zugangsdaten den Nutzern nicht mehr vorliegen.

US 2020/287715 A1 offenbart eine Rechenvorrichtung die so konfiguriert sein kann, dass sie eine Reihe von Eingaben von anderen Rechenvorrichtungen empfängt. Der Satz von Eingaben kann Eingaben enthalten, die von den Computergeräten unter Verwendung kryptografischer Schlüssel der Computergeräte abgeleitet wurden. Der Satz von Eingaben kann in einer Blockchain gespeichert werden, so dass die Eingaben fälschungssicher sind. Ein symmetrischer Schlüssel kann (periodisch, nach Ablauf eines Zeitgebers, gemäß einem festgelegten Protokoll, auf Anfrage usw.) aus zwei oder mehreren der Eingaben erzeugt werden. Der generierte symmetrische Schlüssel kann an die Computergeräte verteilt werden. Der symmetrische Schlüssel kann zur Ver- und Entschlüsselung der Kommunikation zwischen zwei Computergeräten verwendet werden.

US 2020/092097 A1 beschreibt ein Verfahren zur Wiederherstellung eines sozialen Schlüssels für ein erstes Kommunikationsgerät, das die Blockchain-Technologie mit einem asymmetrischen kryptographischen Algorithmus unterstützt. Das Verfahren umfasst das Übertragen einer Geräteidentität der ersten Kommunikationseinrichtung an eine zweite Kommunikationseinrichtung auf der Blockchain, das Durchführen einer Verifizierungsoperation mit der zweiten Kommunikationseinrichtung, das Empfangen einer Nachricht, die einen Verifizierungscode der ersten Kommunikationseinrichtung und einen öffentlichen Schlüssel der zweiten Kommunikationseinrichtung enthält, von der zweiten Kommunikationseinrichtung, wobei die erste Nachricht mit einem öffentlichen Schlüssel der ersten Kommunikationsvorrichtung verschlüsselt ist, Entschlüsseln der Nachricht mit einem privaten Schlüssel der ersten Kommunikationsvorrichtung, um den öffentlichen Schlüssel der zweiten Kommunikationsvorrichtung zu erhalten, und Übertragen von Seed-Phrasen, die mit dem öffentlichen Schlüssel der zweiten Kommunikationsvorrichtung verschlüsselt sind, um eine Krypto-Wallet auf der Blockchain wiederherzustellen, an die zweite Kommunikationsvorrichtung.

Das Dokument DYLAN YAGA ET AL: "Blockchain Technology Overview", ARXIV.ORG, CORNELL UNIVERSITY LIBRARY, 201 OLIN LIBRARY CORNELL UNIVERSITY ITH-ACA, NY 14853, 26. Juni 2019 (2019-06-26), XP081384433, DOI: 10.6028/NIST.IR.8202 bietet einen umfassenden technischen Überblick über die Blockchain-Technologie. Blockchains sind fälschungssichere und fälschungssichere digitale Hauptbücher, die auf verteilte Weise (d. h. ohne zentralen Speicher) und in der Regel ohne eine zentrale Behörde (d. h. eine Bank, ein Unternehmen oder eine Regierung) implementiert werden. Grundsätzlich ermöglichen sie einer Gemeinschaft von Nutzern die Aufzeichnung von Transaktionen in einem gemeinsamen Hauptbuch innerhalb dieser Gemeinschaft, so dass im normalen Betrieb des Blockchain-Netzes keine einmal veröffentlichte Transaktion geändert werden kann.

Die Aufgabe der Erfindung besteht darin ein Verfahren und ein System anzugeben die es erlauben, die zuvor beschriebene Problematik zu lösen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein computerimplementiertes Verfahren zur Generierung eines Geheimnisses in einem ersten Distributed-Ledger-Technologie (DLT) Systems zur Generierung eines privaten Schlüssels in zumindest einem zweiten Distributed-Ledger-Technologie (DLT) Systems angegeben, das Verfahren umfassend die folgenden Schritte:

- Bereitstellen zumindest einer Recheneinheit und eines Datenspeichers,
- Generieren eines Geheimnisses für einen Benutzer A mittels der Recheneinheit, wobei das Generieren des Geheimnisses mittels einer Signaturfunktion sig gemäß der folgenden Formel erfolgt:

$$secretx = sig(x\_privKeyA\ ,\ x\_pubKeyA\ ),$$

wobei:

(x_privKeyA , x_pubKeyA ) ein Tupel bestehend aus einem privaten und einem öffentlichen Schlüssel des Benutzers A in dem ersten DLT System bezeichnet, wobei x_privKeyA den privaten Schlüssel für den Benutzer A und x_pubKeyA den zugehörigen öffentlichen Schlüssel bezeichnet,
sig(privKey, x) eine Funktion bezeichnet, die auf Basis asymmetrischer Kryptographie den privaten Schlüssel privKey verwendet, um eine Signatur der Bitfolge x mittels eines Signaturmechanismus zu erstellen,

- Abspeichern des generierten Geheimnisses in dem zumindest einen Datenspeicher.

Grundidee der vorliegenden Erfindung ist es, auf kryptographisch sichere Art und Weise aus bestehenden Zugangsdaten zu einem DLT System entsprechende Schlüssel für die asymmetrische Kryptographie in anderen DLT Systemen zu generieren, so dass die Nutzer lediglich die Zugangsdaten zum ursprünglichen DLT System entsprechend verwalten müssen. Darüber hinaus ist darüber auch eine automatische Generierung der Zugangsdaten für die einzelnen DLT Systeme möglich, wenn die Zugangsdaten für das ursprüngliche DLT System vorliegen. Dies ermöglicht auch den Zugriff von dApps (decentralized Applications) organisatorisch deutlich zu vereinfachen. Vorteilhaft dabei ist, dass Benutzer unter Verwendung des vorgeschlagenen Vorgehens nicht mehr für jedes DLT System ein eigenes Schlüsselpaar verwalten müssen. Es reicht aus, ein entsprechendes Schlüsselpaar zu generieren, um darüber sicher ein weiteres Schlüsselpaar, für ein anderes DLT System, generieren zu können. Somit erhöht sich die Sicherheit der Nutzung aller beteiligten DLT Systeme, da lediglich für ein DLT System ein Schlüsselpaar sicher verwahrt werden muss. Hier kann entsprechender Aufwand getrieben werden, z.B. über entsprechend verschlüsselte Hardware oder Multiple Signaturverfahren. In der Regel treiben Nutzer verschiedener DLT Systeme diesen Aufwand nicht für alle Systeme die sie verwenden, was die Sicherheit bei der Verwendung einzelner DLT Systeme deutlich minimiert. Hierdurch werden die zuvor genannten Problem umgangen, so dass die Sicherheit für alle verwendeten DLT Systeme gleich hoch ist.

In einer vorteilhaften Ausgestaltung der Erfindung ist der Signaturmechanismus ein Elliptic Curve Digital Signature Algorithm (ECDSA). Vorteilhaft hierbei ist, dass hierdurch das Verfahren einfach standardisiert und in bestehende DLT Systeme integriert werden kann.

Erfindungsgemäß umfasst das Verfahren den folgenden weiteren Schritt:

- Generieren eines privaten Schlüssels in dem zweiten Distributed-Ledger-Technologie (DLT) Systems y, durch Verwendung des Geheimnisses secretx.

Vorteilhaft hierbei ist, dass keine neuen Schlüssel erstellt werden müssen und mit dem Schlüssel eines ersten DLT Systems ein Schlüsselpaar für ein weiteres DLT System generiert werden kann.

In einer vorteilhaften Ausgestaltung der Erfindung umfasst das Verfahren die zusätzlichen Schritte:

- Verschlüsseln des einmalig im DLT System x generierten Geheimnisses durch den Benutzer A mit dem öffentlichen Schlüssel x_pubKeyA des Benutzers A mittels der folgenden Funktion: encrypt(x_pubKeyA, x),
wobei:
encrypt(x_pubKeyA , x) eine Funktion bezeichnet, die für den Benutzer A im DLT System x eine Bytefolge x verschlüsselt,

- Abspeichern des verschlüsselten Geheimnisses in dem Datenspeicher des DLT Systems x.

In einer weiter vorteilhaften Ausgestaltung der Erfindung umfasst das Verfahren den zusätzlichen Schritt:

- Wiederherstellen des in dem Datenspeicher gespeicherten Geheimnisses gemäß der folgenden Formel:

$$decrypt(x\_privKeyA, encrypt(x\_pubKeyA, x)) = x$$

wobei:

decrypt(x_privKeyA, x) eine Funktion bezeichnet, die für den Benutzer A im DLT System x eine Bytefolge x entschlüsselt, die zuvor mit dem öffentlichen Schlüssel x_pubKeyA des Benutzers A im DLT System x verschlüsselt wurde.
Hierdurch wird die Kompatibilität zu DLT Systemen weiter erhöht. Des Weiteren wird hierdurch die Sicherheit des Gesamtsystems erhöht, da sichergestellt wird, dass ein einmal generiertes Geheimnis auch öffentlich abgespeichert werden kann.

In einer vorteilhaften Ausgestaltung der Erfindung umfasst das Verfahren den folgenden zusätzlichen Schritt:

- Abbilden des Geheimnisses secretx auf eine Standard Seed Phrase. Durch die Verwendung einer Standard Seed Phrase wird die Kompatibilität des Verfahrens zu bestehenden DLT Systemen erhöht.

In einer bevorzugten Ausführungsform der Erfindung ist die Standard Seed Phrase eine BIP39 Seed Phrase.
Erfindungsgemäß ist außerdem ein System zur Generierung eines Gemeinnisses in einem ersten Distributed-Ledger-Technologie (DLT) Systems zur Verwendung des privaten Schlüssels in zumindest einem zweiten Distributed-Ledger-Technologie (DLT) Systems angegeben, das System umfasst zumindest eine Recheneinheit und einen Datenspeicher, wobei die Recheneinheit dazu eingerichtet ist, die folgenden Schritte durchzuführen:

- Generieren eines Geheimnisses für einen Benutzer A mittels einer Signaturfunktion sig gemäß der folgende Formel:

$$secretx = sig(x\_privKeyA, x\_pubKeyA),$$

wobei:

(x_privKeyA, x_pubKeyA) ein Tupel bestehend aus einem privaten und einem öffentlichen Schlüssel des Benutzers A in dem ersten DLT System bezeichnet, wobei x_privKeyA den privaten Schlüssel für den Benutzer A und x_pubKeyA den zugehörigen öffentlichen Schlüssel bezeichnet,
sig(privKey, x) eine Funktion bezeichnet, die auf Basis asymmetrischer Kryptographie den privaten Schlüssel verwendet um eine Signatur der Bitfolge x mittels eines Signaturmechanismus zu erstellen,
Generieren eines privaten Schlüssels in dem zweiten DLT System (DLT y), durch Verwendung des Geheimnisses secretx,
der Datenspeicher dazu eingerichtet ist, das generierte Geheimnis abzuspeichern.

Der Vorteil eines Systems, welches das zuvor beschriebene Verfahren umsetzt, ergibt sich daraus, dass hierüber die Automatisierung und programmatische Nutzung des Verfahrens eine Integration in automatisierte Geschäftsprozesse erlaubt wird. Hierüber kann nicht nur die manuelle Verwendung der Erfindung zur auf der einen Seite vereinfachten, auf der anderen Seite aber auch sichereren, Nutzung entsprechender DLT Systeme genutzt werden, sondern ebenso partizipieren auch automatisierte Prozesse von diesen Vorteilen.
In einer bevorzugten Ausführungsform der Erfindung umfasst das System eine Vorrichtung zur Kryptografie, wobei die Vorrichtung derart eingerichtet ist, mittels der Funktion sig(privKey, x) und des privaten Schlüssels privKey auf Basis asymmetrischer Kryptographie eine Signatur der Bitfolge x mittels eines Signaturmechanismus zu erstellen.
Weiter ist erfindungsgemäß ein Computerprogrammprodukt angegeben, umfassend Befehle, die bei der Ausführung des Programms durch einen Computer diesen veranlassen, die Schritte des zuvor beschriebenen Verfahrens auszuführen. Hier ergibt sich ebenfalls der Vorteil, dass eine Möglichkeit für eine größere Automatisierung des Verfahrens im Rahmen von Computerprogrammprodukten zur Interaktion mit DLT Systemen geschaffen wird. Hierbei ist das System nicht auf bestimmte Geschäftsprozesse beschränkt, sondern kann in allen Geschäftsprozessen verwendet werden, die einen Mehrwert aus der DLT Technologie ziehen. Die deutliche Vereinfachung der Verwaltung notwendiger Schlüsselpaare für unterschiedliche DLT Systeme durch das beschriebene Verfahren erlaubt eine einfache und dennoch sichere Kommunikationen zwischen verschiedenen DLT Systemen.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigen:

Fig. 1 ein Blockschaltbild eines Systems zur Generierung eines privaten Schlüssels in einem ersten Distributed-Ledger-Technologie (DLT) Systems x zur Verwendung des privaten Schlüssels in zumindest einem zweiten Distributed-Ledger-Technologie (DLT) Systems y,

Fig. 2 ein Ablaufdiagramm zur Generierung eines Zugangs zu alternativen DLT Systemen gemäß einem Ausführungsbeispiel der Erfindung,

Fig. 3 ein Ablaufdiagramm zur Generierung von Zugangsdaten zu beliebigen DLT Systemen auf Basis von Zugangsdaten zu einem DLT System gemäß einem Ausführungsbeispiel der Erfindung.

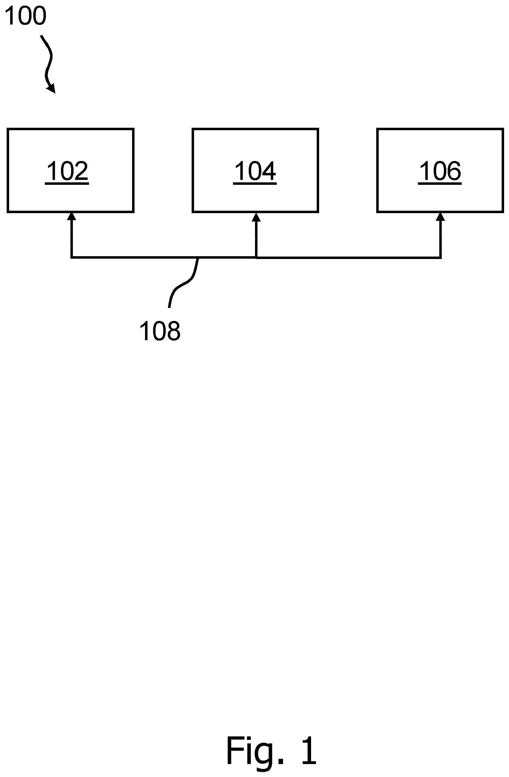

Die Figur 1 zeigt ein Blockschaltbild eines Systems, dass für den Betrieb von Ausführungsformen der vorliegenden Erfindung geeignet ist. Insbesondere ist das System zur Generierung eines privaten Schlüssels in einem ersten Distributed-Ledger-Technologie (DLT) Systems x zur Verwendung des privaten Schlüssels in zumindest einem zweiten Distributed-Ledger-Technologie (DLT) Systems y geeignet. Das in Fig. 1 gezeigte System umfasst eine Recheneinheit 102 die über einen Datenbus 108 mit einem Datenspeicher 104 und einer Ein-/Ausgabe- (E/A-) Schnittstelle 106 verbunden ist. Der Datenspeicher 104 kann ein beliebiges Lese-/Schreib-Speichergerät sein, wie z.B. ein Direktzugriffsspeicher (RAM) oder ein nichtflüchtiges Speichergerät. Ein Beispiel für ein nichtflüchtiges Speichergerät ist beispielsweise eine Festplatte. Die E/A-Schnittstelle 106 ist eine Schnittstelle zu Geräten für die Eingabe oder Ausgabe von Daten oder sowohl für die Eingabe als auch für die Ausgabe von Daten. Beispiele für E/A-Geräte, die an die E/A-Schnittstelle 106 angeschlossen werden können, sind eine Tastatur, eine Maus, eine Anzeige (z.B. ein Monitor) und eine Netzwerkverbindung. Die Recheneinheit ist insbesondere dazu eingerichtet, die folgenden Schritte durchzuführen:

- Generieren eines Geheimnisses für einen Benutzer x mittels einer Signaturfunktion sig gemäß der folgende Formel:

$$secretx = sig(x\_privKeyA , x\_pubKeyA ),$$

wobei:

(x\_privKeyA , x\_pubKeyA ) ein Tupel bestehend aus einem privaten und einem öffentlichen Schlüssel des Benutzers A in DLT System x bezeichnet, wobei x\_privKeyA den privaten Schlüssel für den Benutzer A und x\_pubKeyA den zugehörigen öffentlichen Schlüssel bezeichnet,
sig(privKey, x) eine Funktion bezeichnet, die auf Basis asymmetrischer Kryptographie den privaten Schlüssel verwendet um eine Signatur der Bitfolge x mittels eines Signaturmechanismus zu erstellen, der Datenspeicher dazu eingerichtet ist, das generierte Geheimnis abzuspeichern.

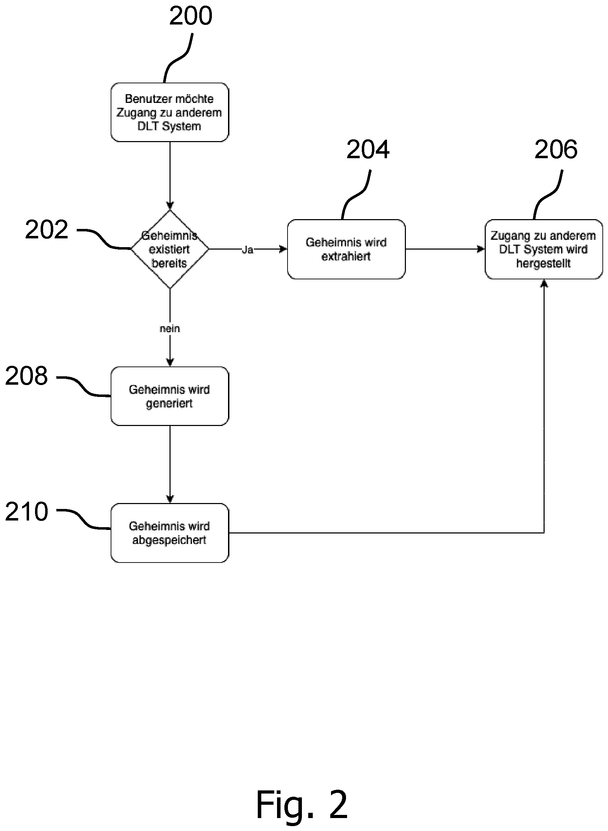

Figur 2 zeigt ein Ablaufdiagramm zur Generierung eines Zugangs zu einem alternativen DLT Systemen gemäß einem Ausführungsbeispiel der Erfindung. In Schritt 200 möchte ein Benutzer Zugang zu einem alternativen DLT System. Hierzu wird zunächst in Schritt 202 überprüft, ob ein entsprechendes Geheimnis bereits existiert. Existiert ein entsprechendes Geheimnis bereits, wird in Schritt 204 das Geheimnis extrahiert und in Schritt 206 der Zugang zu einem anderen DTL System hergestellt.

Wird in Schritt 202 festgestellt, dass kein Geheimnis existiert, wird in 208 das Geheimnis generiert und in Schritt 210 abgespeichert. Durch das abgespeicherte Geheimnis kann in Schritt 206 der Zugang zu dem alternativen DTL System hergestellt werden.

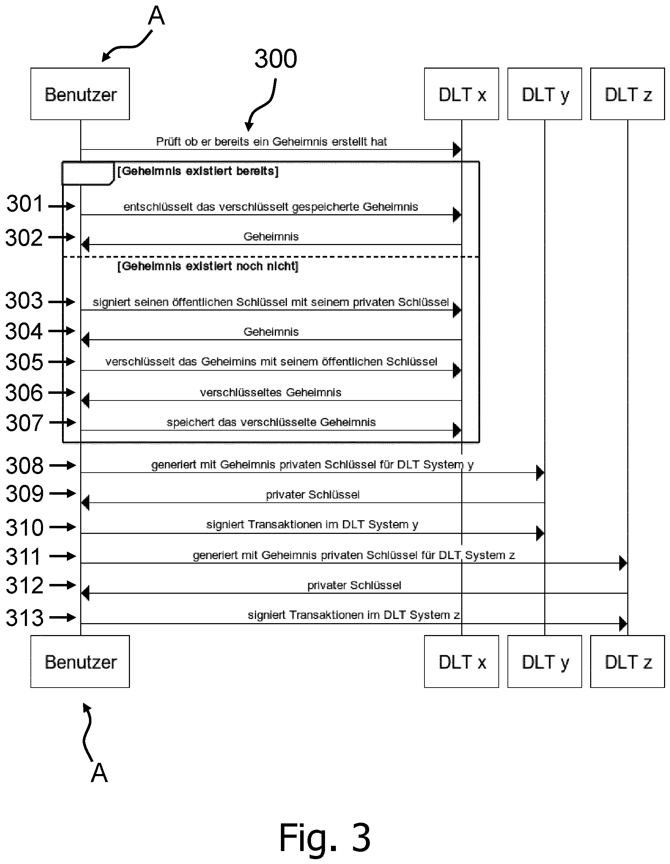

Figur 3 zeigt ein Ablaufdiagramm zur Generierung von Zugangsdaten zu beliebigen DLT Systemen auf Basis von Zugangsdaten zu einem DLT System gemäß einem Ausführungsbeispiel der Erfindung. Dabei wird auf Basis der Zugangsdaten zu einem DLT System x, bestehend aus einem öffentlichen und einem privaten Schlüssel, Zugangsdaten zu weiteren DLT y und DLT z generiert. Das Ablaufdiagramm zeigt zunächst das aus dem Stand der Technik bekannte Verfahren zur Generierung von Zugangsdaten zu einem DLT System x.

Zunächst wird in Schritt 300 überprüft, ob bereits ein Geheimnis erstellt wurde. Wird dabei festgestellt, dass ein Geheimnis bereits existiert wird in Schritt 301 das verschlüsselte Geheimnis entschlüsselt und dem Benutzer 1 in Schritt 302 zugänglich gemacht.

Wird in Schritt 300 festgestellt, dass noch kein Geheimnis existiert signiert in Schritt 304 der Benutzer seinen öffentlichen Schlüssel mit seinem privaten Schlüssel. In Schritt 305 wird dem Benutzer das Geheimnis vom DLT System x dem Benutzer zur Verfügung gestellt. In Schritt 305 wird das so erhaltenen Geheimnis mit dem öffentlichen Schlüssel des Benutzers verschlüsselt. Das verschlüsselte Geheimnis wird in Schritt 306 dem Benutzer 1 zur Verfügung gestellt. In Schritt 307 wird das verschlüsselte Geheimnis im DLT System x gespeichert. Dies hat für den Benutzer jedoch die Konsequenz, dass Adressen, die innerhalb eines DLT Systems x erzeugt wurden, in der Regel nicht in einem anderen DLT System y, DLT System z verwendet werden können, was wiederum die Interaktion der einzelnen DLT Systeme erschwert und damit zu einer Isolierung der einzelnen Systeme führt.

In einem Ausführungsbeispiel der Erfindung ist nun vorgesehen, dass deterministisch und reproduzierbar aus einem bestehenden privaten Schlüssel zu einem DLT basierten System, private Schlüssel zu weiteren DLT basierten Systemen erzeugt werden. In Schritt 308 wird mittels eines Geheimnisses ein privater Schlüssel für das DLT System y generiert. In Schritt 309 wird der private Schlüssel dem Benutzer A zur Verfügung gestellt. Der Ablauf wird im Folgenden beschrieben, wobei die verschiedenen folgenden Definitionen verwendet werden:

Definition 1: Sei

(x_privKeyA, x_pubKeyA)

das Tupel bestehend aus dem privaten und dem öffentlichen Schlüssel des Benutzers A in DLT System x. Hierbei bezeichnet x_privKeyA den privaten Schlüssel für den Benutzer A und x_privKeyA den zugehörigen öffentlichen Schlüssel.

In allen gängigen DLT Systemen müssen Teilnehmer des Systems Transaktionen mit Hilfe von Signaturen erstellen, um die anderen Teilnehmer des Systems zu überzeugen, dass man die jeweilige Transaktion tatsächlich ausführen darf. Hierzu verwenden DLT basierte Systeme entsprechende Signaturverfahren, die in der Regel auf asymmetrischer Kryptographie basieren.

Hierzu wird weiter definiert:

Definition 2: Sei

sig(privKey, x)

eine Funktion die auf Basis asymmetrischer Kryptographie den privaten Schlüssel verwendet, um eine Signatur der Bitfolge x zu erstellen. Ein Beispiel für einen solche Signaturmechanismen ist ECDSA3, was in vielen DLT Systemen aktuell verwendet wird. Zur Generierung der privaten Schlüssel in anderen DLT basierten Systemen, wird nun die Signaturfunktion in besonderer Kombination der Schlüssel verwendet:

Satz 1: Jeder Benutzer A kann nun über die Signaturfunktion sig ein Geheimnis generieren:

$$\text{secretx} = \text{sig}(\text{x\_privKeyA}, \text{x\_pubKeyA})$$

Solange der Benutzer A seinen privaten Schlüssel geheim hält, kann dieses Geheimnis nur durch ihn reproduziert werden. Auch die Kenntnis der Signatur und des zugehörigen öffentlichen Schlüssels des Nutzers, erlauben es dritten nicht den privaten Schlüssel zu generieren und damit das Geheimnis zu reproduzieren (Known-Plaintext-Attack), da dies gleichbedeutend damit wäre, aus der jedweder Transaktion (die in der Regel öffentlich zugänglich sind) der Blockchain den privaten Schlüssel zu extrahieren.

Das Geheimnis secretx kann nun in anderen DLT basierten Systemen verwendet werden, um entsprechende private Schlüssel zu generieren. Diese müssen theoretisch dem Benutzer nicht zugänglich gemacht werden, da sie weder gesichert werden müssen (sie können zu jedem Zeitpunkt wieder auf dem oben beschriebenen Weg generiert werden) noch jemals vom Benutzer einzugeben sind.

BIP394 definiert die Erstellung von Wortlisten (sogenannter Seed Phrases), aus denen private Schlüssel für DLT basierte Systeme generiert werden können. Entsprechende Funktionen sind in allen gängigen DLT Systemen verfügbar. Diese Funktionen können als Input, neben den gängigen Wortlisten, ebenfalls wie oben definierte Geheimnisse als Eingabe verarbeiten. Die Sicherheit kann hier auch als ausreichend sicher angesehen werden, da die Signatur, aus der das Geheimnis im Wesentlichen besteht, über eine ausreichende Länge und entsprechende Enthropie verfügt. Im Falle einer Signatur die über die Standardkurve secp256k1 generiert wird, sprechen man hier über 512 Bit. Regelmäßig werden für Seed Phrases Wortlisten der Länge 12-24 Worte verwendet, die jeweils mit 11 Bit kodiert werden, da die Liste mit den Quellworten über 2048 Worte verfügt. Damit bräuchte man, selbst im Falle von 24 Worten für den Seed, 24*1 1=264 Bit, die 512 bit sind also vollkommen ausreichend. Sollte es also für eine Anwendung notwendig sein, dass dem Benutzer seine Zugangsdaten für die unterschiedlichen DLT Systeme zugänglich gemacht werden, so könnte dies über den oben beschriebenen Weg, mit der Abbildung des Geheimnisses auf eine Standard Seed Phrase, in einem standardisierten Weg passieren. Hierüber ist ebenfalls eine Integration der getätigten Erfindung in Standardprodukte (z.B. Hardwarewallets) möglich.

Einige Programmierschnittstellen zur Verwaltung von Schlüsseln (z.B. MetaMask, WavesKeeper, usw.) bieten entsprechende Signaturmethoden an, die es erlauben, dass Geheimnis (wie in Satz 1 beschrieben) zu generieren. Um bekannte Angriffsvektoren gegen ECDSA56 Signaturen zu unterbinden wird empfohlen jeder Signatur durch die zufällige Wahl eines Per-Message-Secret7 eine zufällige Komponente hinzuzufügen, so dass auch bei identischen Inputs in die Funktion aus Definition 2, unterschiedliche Signaturen herauskommen. Das Hinzufügen der zufälligen Komponente wird in einigen Programmierschnittstellen (z.B. WavesKeeper) automatisiert durchgeführt, in anderen Programmierschnittstellen (z.B. MetaMask) obliegt die Verantwortung hierfür bei dem jeweiligen Entwickler. In dem oben beschriebenen Fall ist die zufällige Komponente unnötig, da das generierte Geheimnis, und damit die Signatur, ja nie jemandem zugänglich gemacht wird, so dass es auch nicht für entsprechende Angriffsvektoren verwendet werden kann. Das Vorgehen in Programmierschnittstellen bei denen automatisiert eine zufällige Komponente hinzugefügt wird, führt natürlich dazu, dass nicht immer dieselbe Signatur, und damit auch nicht immer dasselbe Geheimnis, erzeugt wird. Dies ist allerdings notwendig, da hiermit ja die Zugangsdaten zu den anderen DLT Systemen erzeugt werden. An dieser Stelle ist ein entsprechender Determinismus notwendig. Um für diesen Determinismus zu sorgen, kann das generierte Geheimnis, nach dem erstmaligen Erzeugen verschlüsselt in dem DLT System abgelegt werden. Hierzu verschlüsselt der Benutzer sein generiertes Geheimnis mit seinem öffentlichen Schlüssel, speichert das Ergebnis entsprechend in dem ursprünglichen DLT System ab und kann das Geheimnis zu jedem Zeitpunkt über eine entsprechende Entschlüsselungsfunktion wieder herstellen. DLT Systeme stellen hierfür, ebenfalls auf Basis asymmetrischer Kryptographie (ähnlich wie im Falle der Signaturen), entsprechende Methoden zur Ver- und Entschlüsselung zur Verfügung. Hierzu wird folgendes definiert:

Definition 3: Sei

encrypt(x_pubKeyA, x)

eine Funktion die für den Benutzer A im DLT System x eine Bytefolge x verschlüsselt. Analog gibt es auch eine entsprechende Funktion für die Entschlüsselung zuvor verschlüsselter Bytefolgen:

Definition 4: Sei

decrypt(x_privKeyA, x)

eine Funktion die für den Benutzer A im DLT System x eine Bytefolge x entschlüsselt, die zuvor mit dem öffentlichen Schlüssel x_pubKeyA des Benutzers A im DLT System x verschlüsselt wurde. In dem oben beschriebenen Vorgehen zum Speichern des Geheimnisses verschlüsselt Benutzer A im ursprünglichen DLT System x das einmalig im DLT System x generierte Geheimnis zuerst mit seinem öffentlichen Schlüssel x_pubKeyA, speichert dieses entsprechend im DLT System x ab und kann damit das Geheimnis zu einem späteren Zeitpunkt über die decrypt Funktion aus Definition 4 wieder herstellen. Er berechnet in diesem Schritt:

$$\text{decrypt}(x\_privKeyA, \text{encrypt}(x\_pubKeyA, x)) = x$$

wenn x das zuvor generierte Geheimnis ist. Schematisch ist der Ablauf der Generierung des Geheimnisses für den Zugang zu einem beliebigen DLT System y, auf Basis der Zugangsdaten zu einem DLT System x, in Fig. 1 dargestellt.

Die Schritte 311, 312 und 313 zeigen wie die zuvor beschriebenen Schritte 308, 309, 310 das Generieren eines Geheimnisses und das Signieren von Transaktionen in einem weiteren DTL System z.

Bezugszeichenliste:

| | |
|---|---|
| Recheneinheit | 102 |
| Datenspeicher | 104 |
| Ein-/Ausgabe- (E/A-) Schnittstelle | 106 |
| Datenbus | 108 |
| Benutzer | A |
| Distributed-Ledger-Technologie (DLT) System x | DLT x |
| Distributed-Ledger-Technologie (DLT) System y | DLT y |
| Distributed-Ledger-Technologie (DLT) System z | DLT z |

**EP 4 033 694 B1**

**Patentansprüche**

1. Computerimplementiertes Verfahren zur Generierung eines Geheimnisses in einem ersten Distributed-Ledger-Technologie, DLT System (DLT x) zur Generierung eines privaten Schlüssels in zumindest einem zweiten Distributed-Ledger-Technologie, DLT System (DLT y), das Verfahren umfassend die folgenden Schritte:

   - Bereitstellen zumindest einer Recheneinheit (102) und eines Datenspeichers (104),
   - Generieren eines Geheimnisses für einen Benutzer A mittels der Recheneinheit (102), wobei das Generieren des Geheimnisses mittels einer Signaturfunktion sig gemäß der folgende Formel erfolgt:

$$secretx = sig(x\_privKeyA\,,\ x\_pubKeyA),$$

   wobei:

   $(x\_privKeyA\,,\ x\_pubKeyA)$ ein Tupel bestehend aus einem privaten und einem öffentlichen Schlüssel des Benutzers A in dem ersten DLT System (DLT x) bezeichnet, wobei x_privKeyA den privaten Schlüssel für den Benutzer A und x_pubKeyA den zugehörigen öffentlichen Schlüssel bezeichnet,
   $sig(privKey, x)$ eine Funktion bezeichnet, die auf Basis asymmetrischer Kryptographie den privaten Schlüssel privKey verwendet um eine Signatur der Bitfolge x mittels eines Signaturmechanismus zu erstellen,

   - Abspeichern des generierten Geheimnisses in dem zumindest einen Datenspeicher (104),
   - Generieren eines privaten Schlüssels in dem zweiten DLT System (DLT y), durch Verwendung des Geheimnisses secretx.

2. Verfahren nach Anspruch 1 **dadurch gekennzeichnet, dass** der Signaturmechanismus ein Elliptic Curve Digital Signature Algorithm, ECDSA ist.

3. Verfahren nach einem der vorherigen Ansprüche, **dadurch gekennzeichnet, dass** das Verfahren die zusätzlichen Schritte umfasst:

   - Verschlüsseln des einmalig im ersten DLT System (DLT x) generierten Geheimnisses durch den Benutzer A mit dem öffentlichen Schlüssel x_pubKeyA des Benutzers A mittels der folgenden Funktion:
   encrypt(x_pubKeyA, x),
   wobei:
   $encrypt(x\_pubKeyA\,,\ x)$ eine Funktion bezeichnet, die für den Benutzer A im ersten DLT System (DLT x) eine Bytefolge x verschlüsselt,
   - Abspeichern des verschlüsselten Geheimnisses in dem Datenspeicher (104) des ersten DLT Systems (DLT x).

4. Verfahren nach Anspruch 3 **dadurch gekennzeichnet, dass** das Verfahren den zusätzlichen Schritt umfasst:

   - Wiederherstellen des in dem Datenspeicher gespeicherten Geheimnisses gemäß der folgenden Formel:

$$decrypt(x\_privKeyA\,,\ encrypt(x\_pubKeyA\,,\ x)) = x$$

   wobei:
   $decrypt(x\_privKeyA, x)$ eine Funktion bezeichnet, die für den Benutzer A im ersten DLT System (DLT x) eine Bytefolge x entschlüsselt, die zuvor mit dem öffentlichen Schlüssel x_pubKeyA des Benutzers A im ersten DLT System (DLT x) verschlüsselt wurde.

5. Verfahren nach einem der vorherigen Ansprüche, **dadurch gekennzeichnet, dass** das Verfahren den folgenden zusätzlichen Schritt umfasst:

   - Abbilden des Geheimnisses secretx auf eine Standard Seed Phrase.

6. Verfahren nach Anspruch 5, **dadurch gekennzeichnet, dass** die Standard Seed Phrase eine BIP39 Seed Phrase ist.

**7.** System zur Generierung eines Geheimnisses in einem ersten Distributed-Ledger-Technologie, DLT System (DLT x) zur Generierung eines privaten Schlüssels in zumindest einem zweiten Distributed-Ledger-Technologie, DLT System (DLT y), umfassend zumindest eine Recheneinheit (102) und einen Datenspeicher (104), wobei die Recheneinheit (102) dazu eingerichtet ist, die folgenden Schritte durchzuführen:

- Generieren eines Geheimnisses für einen Benutzer A mittels einer Signaturfunktion sig gemäß der folgende Formel:

$$secretx = sig(x\_privKeyA , x\_pubKeyA),$$

wobei:

(x_privKeyA , x_pubKeyA) ein Tupel bestehend aus einem privaten und einem öffentlichen Schlüssel des Benutzers A in dem ersten DLT System (DLT x) bezeichnet, wobei x_privKeyA den privaten Schlüssel für den Benutzer A und x_pubKeyA den zugehörigen öffentlichen Schlüssel bezeichnet,
sig(privKey, x) eine Funktion bezeichnet, die auf Basis asymmetrischer Kryptographie den privaten Schlüssel verwendet um eine Signatur der Bitfolge x mittels eines Signaturmechanismus zu erstellen,
- Generieren eines privaten Schlüssels in dem zweiten DLT System (DLT y), durch Verwendung des Geheimnisses secretx, und der Datenspeicher (104) dazu eingerichtet ist, das generierte Geheimnis abzuspeichern.

**8.** System nach Anspruch 7, **dadurch gekennzeichnet, dass**
das System eine Vorrichtung zur Kryptografie umfasst, wobei die Vorrichtung derart eingerichtet ist, mittels der Funktion sig(privKey, x) und des privaten Schlüssels privKey auf Basis asymmetrischer Kryptographie eine Signatur der Bitfolge x mittels eines Signaturmechanismus zu erstellen.

**9.** Computerprogrammprodukt, umfassend Befehle, die bei der Ausführung durch eine Vorrichtung der Ansprüche 7 oder 8 bewirken, dass die Verfahrensschritte nach einem der Ansprüche 1 bis 6 ausgeführt werden.

**Claims**

**1.** A computer-implemented method for generating a secret in a first distributed ledger technology (DLT) system (DLT x) for generating a private key in at least one second distributed ledger technology (DLT) system (DLT y), the method comprising the following steps:

- providing at least one processing unit (102) and a data memory (104);
- generating a secret for a user A by means of the processing unit (102), the generation of the secret being carried out by means of a signature function sig according to the following formula:

$$secretx = sig(x\_privKey A, x\_pubKey A),$$

where:

(x_privKey A, x_pubKeyA) denotes a tuple comprising a private key and a public key of the user A in the first DLT system (DLT x), x_privKeyA denoting the private key for the user A, and x_pubKey A denoting the associated public key;
sign(privKey, x) denotes a function, which, based on asymmetric cryptography, uses the private key privKey to create a signature of the bit sequence x by means of a signature mechanism;

- storing the gener
- ated secret in the at least one data memory (104); and
- generating a private key in the second DLT system (DLT y), using the secret secretx.

**2.** The method according to claim 1, **characterized in that** the signature mechanism is an Elliptic Curve Digital Signature Algorithm (ECDSA).

3. The method according to any one of the preceding claims, **characterized by** comprising the additional steps:

   - encrypting the secret, which was generated once in the first DLT system (DLT x), by the user A using the public key x_pubKey A of the user A by means of the following function:
   encrypt(x_pubKeyA, x),
   where:
   encrypt(x_pubKeyA, x) denotes a function that encrypts a byte sequence x for the user A in the first DLT system (DLT x); and
   - storing the encrypted secret in the data memory (104) of the first DLT system (DLT x).

4. The method according to claim 3, **characterized by** comprising the additional step:

   - restoring the secret stored in the data memory according to the following formula:

$$\text{decrypt}(x\_privKeyA, \text{encrypt}(x\_pubKeyA, x)) = x$$

   where:
   decrypt(x_privKey A, x) denotes a function that decrypts a byte sequence x for the user A in the first DLT system (DLT x) which was previously encrypted using the public key x_pubKeyA of the user A in the first DLT system (DLT x).

5. The method according to any one of the preceding claims, **characterized by** comprising the following additional step:

   - mapping the secret secretx on a standard seed phrase.

6. The method according to claim 5, **characterized in that** the standard seed phrase is a BIP39 seed phrase.

7. A system for generating a secret in a first distributed ledger technology (DLT) system (DLT x) for generating a private key in at least one second distributed ledger technology (DLT) system (DLT y), comprising at least one processing unit (102) and a data memory (104), the processing unit (102) being configured to carry out the following steps:

   - generating a secret for a user A by means of a signature function sig according to the following formula:

$$\text{secretx} = \text{sig}(x\_privKey\ A, x\_pubKey\ A),$$

   where:

   (x_privKey A, x_pubKeyA) denotes a tuple comprising a private key and a public key of the user A in the first DLT system (DLT x), x_privKeyA denoting the private key for the user A, and x_pubKey A denoting the associated public key;
   sig(privKey, x) denotes a function, which, based on asymmetric cryptography, uses the private key to create a signature of the bit sequence x by means of a signature mechanism;

   - generating a private key in the second DLT system (DLT y), using the secret secretx, and the data memory (104) being configured to store the generated secret.

8. The system according to claim 7, **characterized in that**
   the system comprises a device for cryptography, the device being configured to create a signature of the bit sequence x by means of a signature mechanism, using the function sig(privKey, x) and the private key privKey based on asymmetric cryptography.

9. A computer program product, comprising commands that, when executed by a device according to claim 7 or 8, cause the method steps according to any one of claims 1 to 6 to be carried out..I z

**Revendications**

1. Procédé mis en oeuvre par ordinateur permettant la génération d'un secret dans un premier système de technologie de registre distribué, DLT, (DLT x) pour la génération d'une clé privée dans au moins un deuxième système de technologie de registre distribué, DLT, (DLT y), le procédé comprenant les étapes suivantes :

   - mise au point d'au moins une unité de calcul (102) et d'une mémoire de données (104),
   - génération d'un secret pour un utilisateur A au moyen de l'unité de calcul (102), où la génération du secret a lieu au moyen d'une fonction de signature sig selon la formule suivante :

$$secretx = sig(x\_clé~privée~A, x\_clé~publique~A),$$

   où :

   (x_clé privée A, x_clé publique A) désigne un uplet constitué d'une clé privée et d'une clé publique de l'utilisateur A dans le premier système DLT (DLT x), où x_clé privée A représente la clé privée pour l'utilisateur A et x_clé publique A représente la clé publique correspondante,
   Sig(clé privée, x) désigne une fonction qui emploie la clé privée privKey sur une base d'une cryptographie asymétrique afin d'établir une signature de la suite de bits x au moyen d'un mécanisme de signature,

   - enregistrement du secret généré dans l'au moins une mémoire de données (104),
   - génération d'une clé privée dans le deuxième système DTL (DTL y) par l'emploi du secret secretx.

2. Procédé selon la revendication 1, **caractérisé en ce que** le mécanisme de signature est un algorithme de signature numérique de courbe elliptique, ECDSA.

3. Procédé selon l'une des revendications précédentes, **caractérisé en ce que** le procédé comprend les étapes supplémentaires :

   - chiffrement du secret généré en un exemplaire dans le premier système DLT (DLT x) par l'utilisateur A avec la clé publique x_clé publique A de l'utilisateur A au moyen de la fonction suivante :
   encrypt(x_clé publique A, x),
   où
   encrypt(x_clé publique A) désigne une fonction qui chiffre une suite de bits x pour l'utilisateur A dans le premier système DLT (DLT x),
   - enregistrement du secret chiffré dans la mémoire de données (104) du premier système DLT (DLT x).

4. Procédé selon la revendication 3, **caractérisé en ce que** le procédé comprend l'étape supplémentaire :

   - restauration du secret enregistré dans la mémoire de données selon la formule suivante :

$$decrypt(x\_clé~privée~A, encrypt(x\_clé~publique~A, x)) = x$$

   où
   decrypt(x_clé privée A, x) désigne une fonction qui déchiffre pour l'utilisateur A une suite de bits x dans le premier système DLT (DLT x) qui a été chiffrée auparavant avec la clé publique x_clé publique A de l'utilisateur A dans le premier système DLT (DLT x).

5. Procédé selon l'une des revendications précédentes, **caractérisé en ce que** le procédé comprend l'étape suivante :

   - représentation du secret secretx sur une seed phrase normalisée.

6. Procédé selon la revendication 5, **caractérisé en ce que** la seed phrase normalisée est une seed phrase BIP39.

7. Système de génération d'un secret dans un premier système de technologie de registre distribué, DLT, (DLT x) pour la génération d'une clé privée dans au moins un deuxième système de technologie de registre distribué, DLT, (DLT y), comprenant au moins une unité de calcul (102) et une mémoire de données (104), où l'unité de calcul (102) est conçue pour exécuter les étapes suivantes :

- génération d'un secret pour un utilisateur A au moyen d'une fonction de signature sig selon la formule suivante :

$$secretx = sig(x\_clé\ privée\ A,\ x\_clé\ publique\ A)$$

où :

(x_clé privée A, x_clé publique A) désigne un uplet constitué d'une clé privée et d'une clé publique de l'utilisateur A dans le premier système DLT (DLT x), où x_clé privée A représente la clé privée pour l'utilisateur A et x_clé publique A représente la clé publique correspondante,
sig(clé privée, x) désigne une fonction qui emploie la clé privée privKey sur une base d'une cryptographie asymétrique afin d'établir une signature de la suite de bits x au moyen d'un mécanisme de signature,

- génération d'une clé privée dans le deuxième système DTL (DTL y) par l'emploi du secret secretx, la mémoire de données (104) est conçue pour enregistrer le secret généré.

8. Système selon la revendication 7, **caractérisé en ce que**
le système comprend un dispositif de cryptographie, dans lequel le dispositif est conçu pour établir, au moyen de la fonction sig(clé privée, x) et de la clé privée privkey, sur la base d'une cryptographie asymétrique, une signature de la suite de bits x au moyen d'un mécanisme de signature.

9. Produit-programme informatique, comprenant des ordres qui, lors de l'exécution par un dispositif selon les revendications 7 ou 8, font en sorte que les étapes du procédé selon l'une des revendications 1 à 6 soient exécutées.

100

102　　104　　106

108

Fig. 1

Fig. 2

A

300

Benutzer | DLT x | DLT y | DLT z

Prüft ob er bereits ein Geheimnis erstellt hat

[Geheimnis existiert bereits]

301 → entschlüsselt das verschlüsselt gespeicherte Geheimnis

302 → Geheimnis

[Geheimnis existiert noch nicht]

303 → signiert seinen öffentlichen Schlüssel mit seinem privaten Schlüssel

304 → Geheimnis

305 → verschlüsselt das Geheimins mit seinem öffentlichen Schlüssel

306 → verschlüsseltes Geheimnis

307 → speichert das verschlüsselte Geheimnis

308 → generiert mit Geheimnis privaten Schlüssel für DLT System y

309 → privater Schlüssel

310 → signiert Transaktionen im DLT System y

311 → generiert mit Geheimnis privaten Schlüssel für DLT System z

312 → privater Schlüssel

313 → signiert Transaktionen im DLT System z

Benutzer | DLT x | DLT y | DLT z

A

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020287715 A1

- US 2020092097 A1

**In der Beschreibung aufgeführte Nicht-Patentliteratur**

- Blockchain Technology Overview. **DYLAN YAGA et al.** ARXIV.ORG. CORNELL UNIVERSITY LIBRARY, 26. Juni 2019